# EUROPEAN PATENT SPECIFICATION

(11) **EP 1 447 380 B1**
(45) Date of publication and mention of the grant of the patent: **29.10.2008**
(21) Application number: 03254275.5
(22) Date of filing: 04.07.2003
(51) Int. Cl.: C01B 15/10

(54) **Process for preparing granular sodium percarbonate**
Verfahren zur Herstellung von Granulatförmigem Natriumpercarbonat
Procédé de préparation de percarbonate de sodium sous forme de granulés

(30) Priority: 17.02.2003 KR 2003009829
(43) Date of publication of application: 18.08.2004
(73) Proprietor: DC Chemical Co., Ltd., Joong-ku, Seoul 100-718 (KR)
(72) Inventor: Choo, Won Hong, Nam-ku Incheon 402-705 (KR); Kim, Yong ll, Nam-ku Incheon 402-042 (KR); Chang, Young Ho, An Yang Kyungki-do 431-050 (KR); Chung, San ho, 2/203 Dong Yang, IkSan Chollabook-do 570-600 (KR); Song, Yun Yong, 3/106 Dong Yang, IkSan Chollabook-do 570-600 (KR)
(74) Representative: Fairbairn, Angus Chisholm

(56) References cited:
- EP-A- 0 429 321
- FR-A- 869 103
- FR-A- 869 104
- US-A- 4 022 874
- US-A- 4 190 635
- US-A- 5 851 420

## Description

### BACKGROUND OF THE INVENTION

### FIELD OF THE INVENTION

The present invention relates to a process for preparing granular sodium percarbonate. More particularly, the process of the present invention enables to adjust particle size of sodium percarbonate produced irrespective of the particle size of sodium carbonate being used, thereby obtaining granular sodium percarbonate with desired physical properties without necessitating a granulation process, wherein hydrogen peroxide solution is sprayed to anhydrous sodium carbonate containing 5-10% of water based on the weight of anhydrous sodium carbonate while simultaneously introducing air at a predetermined temperature and rate. This is quite contrary to the conventional dry processes for preparing granular sodium percarbonate, wherein hydrogen peroxide solution is sprayed to anhydrous sodium carbonate to produce sodium percarbonate and sodium percarbonate produced is then dried in a fluidized bed dryer, produces sodium percarbonate, of which particle size is dependent on the particle size of sodium carbonate used, thus requiring a separate granulation step.

### DESCRIPTION OF THE RELATED ART

Sodium percarbonate dissolved in water is decomposed into sodium carbonate and hydrogen peroxide, which are known to be environment-friendly and would not damage textiles when bleaching clothes and thus has been widely used as an oxygenated bleaching agent. The conventional powder detergents generally contain sodium percarbonate as a bleaching agent together with zeolite as a builder and zeolite facilitates the decomposition of sodium percarbonate. Thus, for using both sodium percarbonate and zeolite as components for a detergent, it has been customary to coat the surface of sodium percarbonate with borate, silicate, sulfate, carbonate and the like to improve its stability.

Examples of methods for preparing sodium percarbonate include a crystallization process, a fluidized bed spray granulation process and a dry process. The crystallization process is a traditional standard wet method that crystallizes sodium percarbonate by a reaction between two solutions of sodium carbonate and hydrogen peroxide. The fluidized bed spray granulation process is a method that the two solutions of sodium carbonate and hydrogen peroxide at a relatively high temperature, by using small sodium percarbonate particles as a seed, are sprayed to increase the size of granular particles of the seed. Examples of a dry process is a method performed in such a manner that sodium carbonate and hydrogen peroxide are reacted and sodium percarbonate thus formed is dried; and a method carried out in such a manner that hydrogen peroxide solution is sprayed while simultaneously fluidizing sodium carbonate with hot blast in a fluidized bed processor followed by drying of thus generated sodium percarbonate.

The crystallization process is a very complicated process where solubilization and purification of sodium carbonate are essential while separation of reactants from Mother Liquor and dehydration are further required followed by either drying before granulation or granulation before drying. In addition, the sodium percarbonate thus obtained has a low bulk density, has a non-spherical shape and a rough surface not suitable for surface coating to improve stability.

In the case of the fluidized bed spray granulation process, the small sodium percarbonate particles are fluidized by hot blast in a fluidized bed processor while two solutions of sodium carbonate and hydrogen peroxide are simultaneously sprayed to the sodium percarbonate particles through nozzles to increase the size of the particles. Therefore, it is essential to evaporate a large amount of water in a fluidized bed processor because sodium carbonate in a solution is used, which makes the process uneconomical due to high energy consumption.

When preparing sodium percarbonate according to the dry process, the sodium carbonate particles and hydrogen peroxide are directly reacted to produce sodium percarbonate particles exhibiting similar distribution of particle size to that of sodium carbonate particles. Therefore, in the case that the sodium carbonate shows small particle size and a low bulk density, the sodium percarbonate produced also exhibits small particle size and a low bulk density thus not suitable to be used in a synthetic detergent or a bleaching agent.

In addition, U.S. Pat. No. 4,022,874 for dry process for sodium percarbonate discloses a method comprising reacting hydrogen peroxide solution with sodium carbonate monohydrate or sodium carbonate hydrated with 10-25% of water to produce sodium percarbonate. The physical properties such as particle size and bulk density of sodium percarbonate produced is dependent on the physical properties of sodium carbonate monohydrate to be used. In other words, for obtaining sodium percarbonate with large particle size, sodium carbonate with large particle size must be used. To use sodium percarbonate as a bleaching ingredient in a synthetic detergent containing zeolite, the surface of sodium percarbonate is often coated with borate, silicate, sulfate or carbonate to improve its stability. When the particle size of sodium percarbonate is small, a large amount of a coating material is required due to increase in specific surface area thereby losing a great deal amount of active oxygen and also not enabling to improve stability. Therefore, the process for preparing sodium percarbonate of the above patent is not advantageous in that there is a limitation in particle size of sodium carbonate monohydrate to be used as a starting material. Additionally, the large amount of water contained in sodium carbonate monohydrate or sodium carbonate hydrated with 10-25% water must be removed during a reaction or a drying step, which accompanies energy loss thus not being economical.

U.S. Pat. No. 6,248,707 discloses a process for preparing sodium percarbonate that comprises converting anhydrous sodium carbonate with low specific gravity to sodium carbonate monohydrate, which is in turn reacted with hydrogen peroxide solution. According to the process, anhydrous sodium carbonate is preheated up to 100°C and then boiled water is introduced to convert anhydrous sodium carbonate into sodium carbonate monohydrate. Since there occurs energy loss in preparing sodium carbonate monohydrate, it is thus understood that energy consumption becomes greater in this process than that which produces sodium percarbonate by using anhydrous sodium carbonate. After the completion of reaction between sodium carbonate monohydrate and hydrogen peroxide solution, the water content of wet sodium percarbonate becomes about 24%, which leads to poor flowability of wet sodium percarbonate thus making its delivery to a drying step difficult. It is easily recognized that high water content in wet sodium percarbonate requires more energy during a drying step. In addition, according to the process disclosed in the above patent, it is essential to go through with a granulation step to adjust the particle size of sodium percarbonate being dried. Therefore, the process is relatively complex comprising a multiple steps of a hydration of sodium carbonate, a reaction of sodium percarbonate, drying and a granulation step and thus not preferable.

US 5,851,420 discloses a process for manufacturing granular sodium comprising the steps of spraying a hydrogen peroxide solution to anhydrous sodium carbonate and fluidized-bed drying of the obtained sodium percarbonate.

From the conventional techniques described above, it can be concluded that in order to use sodium percarbonate as a bleaching ingredient in a synthetic detergent, which contains zeolite, the surface of sodium percarbonate should be coated with borate, silicate, sulfate or carbonate to improve its stability. In coating, if the surface of sodium percarbonate prior to coating is rough or non-spherical, its area becomes large thus requiring a large amount of a coating material. Moreover, when the mean particle size of sodium percarbonate is too small, a large amount of a coating material is required and the improvement in stability of coated sodium percarbonate cannot be achieved. It is preferable that the mean particle size of sodium percarbonate for preparing coated sodium percarbonate to improve the stability be in a range of 500-800 µm. However, it is impossible to produce sodium percarbonate with a mean particle size of 500-800 µm without carrying out a granulation step according to the conventional dry process for preparing sodium percarbonate.

### SUMMARY OF THE INVENTION

The present inventors have developed a novel process for preparing granular sodium percarbonate which can (a) adjust the particle size during a step of sodium percarbonate production without a separate step of granulation of sodium percarbonate thus produced, and (b) improve stability with respect to zeolite during a step of the production of granular sodium percarbonate and improve physical properties so that sodium percarbonate produced can be used as a bleaching agent in a synthetic detergent when coated with borate, silicate, sulfate or carbonate.

Accordingly, the object of this invention is to provide an improved process for preparing granular sodium percarbonate with high quality having a content of active oxygen of above 14.0%, the bulk density of 0.90-1.05 g/ml and a mean particle size of 500-800 µm, without necessitating a separate step of granulation.

### BRIEF DESCRIPTION OF THE DRAWINGS

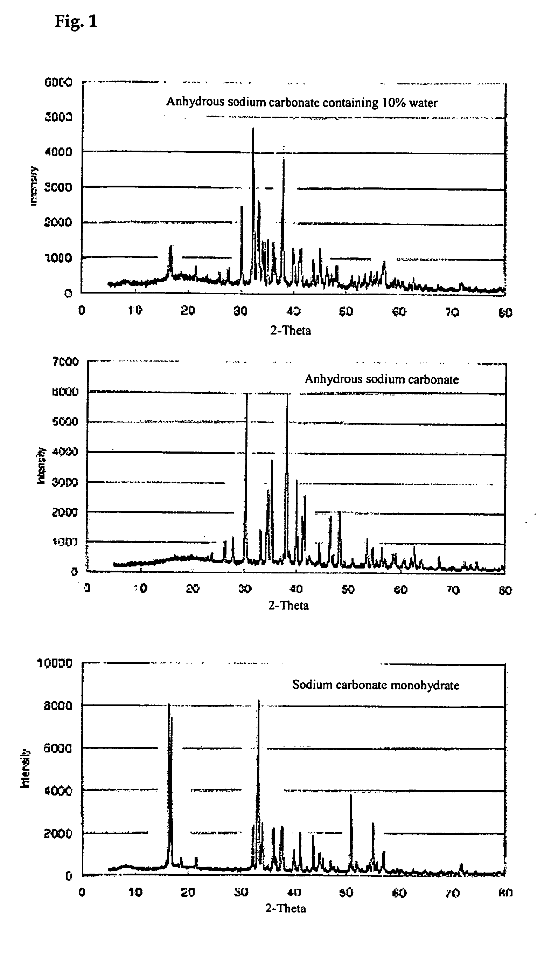

Fig. 1 represents the X-ray diffraction results of anhydrous sodium carbonate, sodium carbonate monohydrate and anhydrous sodium carbonate bound to free water used in this invention.

### DETAILED DESCRIPTION OF THIS INVETNION

In an aspect of the present invention, there is provided a process for preparing granular sodium percarbonate, which comprises (a) reacting sodium carbonate with hydrogen peroxide solution to produce sodium percarbonate in a reactor by spraying said hydrogen peroxide solution while simultaneously blowing air into the reactor and (b) fluidized-drying the sodium percarbonate to prepare the granular sodium percarbonate, wherein the sodium carbonate is anhydrous sodium carbonate bound to free water containing 5-10% of water based on the weight of anhydrous sodium carbonate.

The present invention will be described in more detail as follows:

The most prominent features of this invention are that the sodium percarbonate produced by dry process is not dependent upon the particle size of sodium carbonate being used and the sodium percarbonate having a mean particle size of 500-800 µm can be obtained without performing a separate granulation step. In other words, the present invention accomplishes the simplification of the process avoiding the granulation step by adjusting the water content in sodium carbonate being used.

In the present invention, as sodium carbonate reacts with hydrogen peroxide solution, the anhydrous sodium carbonate bound to free water containing 5-10% of water based on the weight of anhydrous sodium carbonate is used. If the amount of water introduced exceeds 10% based on the weight of anhydrous sodium carbonate, (a) much heat of hydration is generated so that the reaction temperature becomes higher during the reaction with hydrogen peroxide to result in the loss of the content of active oxygen, and (b) the water content of the reaction product between sodium carbonate and hydrogen peroxide is increased so that its delivery to a drying step becomes difficult and the energy consumption is increased during the drying step. In addition, the sodium percarbonate produced using sodium carbonate with excess water is very likely to exhibit lower bulk density and lumps between fine particles is generated to render the preparation of coated sodium percarbonate difficult. In contrast, if the amount of water introduced into anhydrous sodium carbonate is less than 5% based on the weight of anhydrous sodium carbonate, the particle size of sodium percarbonate is not increased.

The equipment for introducing water into anhydrous sodium carbonate includes a variety of conventional powder mixers allowing solution introduction. In particular, considering a heat of hydration generated in mixing anhydrous sodium carbonate and water, it is more advantageous in that the equipment is adopted with cooling jacket or blowing-in means for cooling the heat of hydration. When anhydrous sodium carbonate is mixed at room temperature with 5-10% water based on the weight of anhydrous sodium carbonate, the temperature of the reactant increases up to about 60°C due to the heat of hydration. Therefore, it is preferable that the temperature of the reactant be adjusted to a temperature below 30°C, more preferably to 15-30°C. The reactant temperature of below 30°C promotes the contact of anhydrous sodium carbonate to water and the agglomeration of fine particles of anhydrous sodium carbonate thus facilitating the increase of particle size in preparing sodium percarbonate. In contrast, if the temperature of the reactant is higher than 30°C, the particle size of sodium carbonate will not be altered even after the contact of anhydrous sodium carbonate with water, so that the increase of particle size in preparing sodium percarbonate is not promoted. In particular, if hydrogen peroxide is reacted with sodium carbonate while maintaining the reactant temperature to 60°C after mixing anhydrous sodium carbonate with water, the sodium percarbonate produced exhibits lower bulk density and the lumps of fine particles are generated so that it is not suitable in coating.

In the prominent ingredient of this invention, anhydrous sodium carbonate bound to free water, anhydrous sodium carbonate and free water are bound to each other. Fig. 1 represents the X-ray diffraction results of anhydrous sodium carbonate, sodium carbonate monohydrate and anhydrous sodium carbonate containing 10% water based on the weight of anhydrous sodium carbonate. The X-ray diffraction pattern of anhydrous sodium carbonate used in this invention is very different from that of sodium carbonate monohydrate but is very similar to that of anhydrous sodium carbonate. Therefore, it is recognized that the sodium carbonate used in this invention is different from those used in conventional dry processes as disclosed in U.S. Pat. Nos. 4,022,874 and 6,248,707 and has a form bound between anhydrous sodium carbonate and free water, which can render this invention distinct over the conventional dry processes for preparing sodium percarbonate.

The reactor used in this invention comprises an agitator for mixing sodium carbonate and hydrogen peroxide solution and an equipment for blowing air into an inner part of the reactor. For producing sodium percarbonate, sodium carbonate is fed into the reactor, agitated and reacted with hydrogen peroxide solution in a continuous manner. In order to prevent temperature increase due to an exothermic reaction and paste formation of a reaction mixture due to water, the internal temperature and water content of the reactor is adjusted by blowing air into the reactor simultaneously upon initiating the reaction. The agitation speed of an agitator for mixing sodium carbonate and hydrogen peroxide solution should be adjusted depending on the state of a reactant. If the agitation speed is very low, the reaction between sodium carbonate and hydrogen peroxide solution cannot be proceeded and thus hydrogen peroxide is decomposed; and if it is very high, the particles of sodium carbonate are likely to be broken, which makes it impossible to prepare sodium percarbonate having mean particle size of above 500 *µ*m.

It is preferable that the internal temperature of the reactor be maintained at 20-80°C. The reaction between sodium carbonate and hydrogen peroxide solution results in heat generation thus increasing the temperature of the reactant. The increased temperature of the reactant can be adjusted by blowing air into the inner part of the reactor. The air being introduced into the reactor is passed through a cooler and then fed into the inner part of the reactor. As such, the temperature of the air is also adjusted depending on the temperature of the reaction product of sodium carbonate and hydrogen peroxide solution. If the internal temperature of the reactor is lower than 20°C, the reactivity between sodium carbonate and hydrogen peroxide solution is decreased and thus it is very likely that there will be unreacted hydrogen peroxide. In contrast, if the internal temperature of the reactor is higher than 80°C, hydrogen peroxide will be decomposed so that the content of active oxygen becomes low and the yield of the reaction will be also decreased. To adjust the internal temperature of the reactor, it is preferable that the amount of air being introduced be 2-8 m³/min per 1 m³ based on the volume of the reactor and the temperature of the air be maintained at -5 ∼ 20°C.

It is preferable that the water content of the sodium percarbonate resulted from the reaction between sodium carbonate and hydrogen peroxide solution range from 5 to 20% based on the weight of the sodium percarbonate. If water content is less than 5%, it is impossible to adjust the particle size of sodium percarbonate thus sodium percarbonate having a mean particle size of above 500 µm cannot be produced. If the water content is more than 20%, the flowability of the sodium percarbonate becomes poor and thus its delivery to a drying step becomes difficult and the energy consumption in drying becomes greater. In addition, sodium percarbonate prepared under such a condition results in lower bulk density and lumps between fine particles are generated to render the preparation of coated sodium percarbonate difficult.

One of the differences between the present invention and the conventional dry processes is that the present invention does not use sodium carbonate monohydrate or sodium carbonate hydrated with more than 10% of water. If the present process uses either sodium carbonate monohydrate or sodium carbonate hydrated with more than 10% of water, the water content in the inner part of the reactor is increased to above 20% due to water contained in sodium carbonate so that the shortcomings such as poor flowability of a reactant, reduced bulk density of dried sodium percarbonate and generation of particles with imbalanced heterogeneous appearance.

In preparing sodium percarbonate of this invention, the amount of hydrogen peroxide preferred to be used is 1.5 mole with reference to 1 mole of sodium carbonate and its concentration is 40-70 wt%. Conventionally, sodium silicate such as water glass and sodium metasilicate, and magnesium compound such as magnesium sulfate and magnesium chloride are used for increasing the stability of active oxygen in preparing sodium percarbonate. In this connection, the process of the present invention introduces a conventional stabilizer into sodium carbonate or hydrogen peroxide solution prior to a reaction.

Sodium percarbonate prepared in the reactor, which contains water, is continuously conveyed to fluidized bed dryer and then dried. It is preferable that the temperature of hot blast provided into the fluidized bed dryer be adjusted in the range of 90-140°C in order to maintain the temperature of sodium percarbonate to be dried in a fluidized bed dryer set at 50-100°C. The sodium percarbonate particles having excessively large or small size are separated through a sifter and then reintroduced into the reactor. The sifted particles having excessively large size are crushed in a grinder and then reintroduced into the reactor. Since the particles of sodium percarbonate of inappropriate size are reintroduced into the reactor, there will be no wastes produced in the present invention. In addition, the particle size of sodium percarbonate can be adjusted to a desired size by adjusting the mesh size of the sifter.

Sodium percarbonate prepared according to the present invention exhibits the content of active oxygen of above 14.0%, preferably 14.0-14.9%, the bulk density of 0.90-1.05 g/ml and the mean particle size of 500-800 *µ*m, and thus have improved stability. In particular, sodium percarbonate prepared according to the present invention is suitable in preparing coated sodium percarbonate served as a bleaching agent in a synthetic detergent containing zeolite, which is prepared in such a manner its surface is coated with borate, silicate, sulfate or carbonate.

The following specific examples are intended to be illustrative of the invention and should not be construed as limiting the scope of the invention as defined by appended claims.

### EXAMPLE I

Anhydrous sodium carbonate was introduced at a rate of 9 kg/hr into a 30 L primary reactor, which was equipped with an agitator and an equipment for blowing air while spraying deionized water through a nozzle at a rate of 0.81 kg/hr and blowing air, which passed through a cooler, into the inner part of the reactor. The amount of air being introduced into the reactor was set at 2-3 m³/min per 1 m³ based on the reactor volume, and the temperature of the air was kept at 10-15°C while the internal temperature of the reactor was kept at 25-30°C. As anhydrous sodium carbonate was mixed with water, some fine particles were agglomerated. The reactant had a good flowability enough to ensure its delivery to the secondary reactor.

Into the secondary reactor of the identical shape to the primary reactor was introduced the wet sodium carbonate delivered from the primary reactor and sodium metasilicate 5 hydrates (Na₂SiO₃ · 5H₂O) was also introduced at a rate of 70 g/hr. In addition, 61 wt% of hydrogen peroxide solution, wherein 0.65 wt% of magnesium sulfate 7 hydrates (MgSO₄ · 7H₂O) was dissolved, was sprayed through a nozzle at a rate of 7.1 kg/hr to be reacted. In order to keep the reactant temperature in the inner part of the secondary reactor at 40°C and the water content at 14%, the air passed through a cooler was blown into the reactor. The amount of air introduced into the secondary reactor was 3-4 m³/min per 1 m³ based on the reactor volume, its temperature was 10-15°C. The wet sodium percarbonate particles in the secondary reactor were continuously conveyed to a fluidized bed dryer and dried by hot blast of 110°C for 1 hr. The dried sodium percarbonate particles were passed through a sifter to separate out those of 300-1400 *µ*m in diameter distribution. The sodium percarbonate particles with a diameter of above 1400 *µ*m were crushed in a grinder and the resultant together with the sodium percarbonate particles with a diameter of below 300 *µ*m were reintroduced into the secondary reactor. According to the procedure described above, the above process was continuously run for 10 hr to yield 131 kg of sodium percarbonate particles with the content of active oxygen of 14.45% and the mean particle size of 752 *µ*m. The particle size distribution of anhydrous sodium carbonate used in preparation process is shown in Table I and the results of analysis of stability and particle size distribution of sodium percarbonate produced is shown in Table II.

### COMPARATIVE EXAMPLE I

Using only the secondary reactor in Example I, sodium metasilicate 5 hydrates was introduced into the reactor at a rate of 70 g/hr and 61 wt% of hydrogen peroxide solution dissolving 0.65 wt% of magnesium sulfate 7 hydrates (MgSO₄ · 7H₂O) was sprayed for reaction through a nozzle at a rate of 7.1 kg/hr. The conditions of reaction and drying were same as in Example 1. According to the procedure described above, the run was continuously performed for 10 hr to yield 129 kg of sodium percarbonate particles showing the content of active oxygen of 14.39% and the mean particle size of 523 *µ*m. The analysis data of stability and particle size distribution of sodium percarbonate produced is shown in Table II.

**TABLE I**

| **Particle Size Distribution and Bulk Density of Anhydrous Sodium Carbonate Used** | | |
|---|---|---|
| Particle Size Distribution | Above 850 *µ*m | 8.4% |
| | 600 *µ*m | 15.7% |
| | 500 *µ*m | 14.6% |
| | 425 *µ*m | 11.5 % |
| | 300 *µ*m | 14.1% |
| | 250 *µ*m | 16.0% |
| | 180 *µ*m | 10.2% |
| | Below 180 *µ*m | 9.5% |
| | Mean Particle Size | 399 *µ*m |
| Bulk Density | | 1.01 g/ml |

**TABLE II**

| Classification | | Ex. I | Com. Ex. I |
|---|---|---|---|
| Particle Size Distribution | Above 1400 µm | 1.2% | 0.3 |
| | 1000 µm | 18.2% | 2.2 |
| | 850 µm | 19.2% | 9.5 |
| | 600 µm | 32.4% | 13.1 |
| | 500 µm | 24.0% | 23.3 |
| | 425 µm | 3.7% | 33.2 |
| | 300 µm | 1.1% | 17.6 |
| | Below 300 µm | 0.2% | 0.8 |
| | Mean Particle Size | 752 µm | 523 µm |
| Content of Active Oxygen | | 14.45% | 14.39% |
| Bulk Density | | 1.02 g/ml | 1.02 g/ml |
| Water Content¹⁾ | | 0.11% | 0.12% |
| Storage Stability²⁾ | | 93% | 90% |
| Zeolite Stability³⁾ | | 65% | 45% |
| ¹)water content: 55°C, 1 hr, vacuum dry | | | |
| ²)storage stability: measured the residual content of active oxygen at 40°C with 80% of relative humidity for 7 days and the stability relative to the initial was calculated. | | | |
| ³)zeolite stability: measured the residual content of active oxygen of a mixture including each 1.5 g of zeolite and sodium percarbonate at 32°C with 80% of relative humidity for 48 hr and the stability relative to the initial was calculated. | | | |

As indicated in Table II, the particle size of sodium percarbonate produced in Example I was larger than that in Comparative Example I. While Example I and Comparative Example I both used anhydrous sodium carbonate, Example I using anhydrous sodium carbonate bound to free water according to this invention produced sodium percarbonate larger in particle size than that of Comparative Example I which used anhydrous sodium carbonate. In Example I, 9% deionized water based on the weight of anhydrous sodium carbonate was introduced into anhydrous sodium carbonate prior to a reaction between anhydrous sodium carbonate and hydrogen peroxide solution, and this resulted in agglomerating fine particles of anhydrous sodium carbonate and thus the particle size was increased.

From the comparison of stability of sodium percarbonate in Example I and Comparative Example I, it is demonstrated that the stability of sodium percarbonate in Example I according to this invention was greatly enhanced, in particular, the stability in mixture with zeolite was dramatically improved. A zeolite facilitates the decomposition of sodium percarbonate. Therefore, the decomposition of sodium percarbonate is increased as the contact area of zeolite and sodium percarbonate is increased. In order to reduce the decomposition of sodium percarbonate by zeolite, it is advised to reduce the contact area of zeolite and sodium percarbonate, and this can be achieved by the increase in particle size of sodium percarbonate. In this context, it is understood that sodium percarbonate prepared according to this invention is particularly suitable in preparing coated sodium percarbonate in a synthetic detergent containing zeolite in the sense that sodium percarbonate with a larger particle size can be successfully produced according to the present invention without necessitating a granulation step.

### EXAMPLE II

The anhydrous sodium carbonate used in Example I and Comparative Example I was sieved through a sifter of 425 *µ*m to obtain anhydrous sodium carbonate with a particle size of below 425 *µ*m which was used for preparing sodium percarbonate as in Example I. That is, into a primary reactor was introduced the anhydrous sodium carbonate sifted at a rate of 9 kg/hr while deionized water was introduced at a rate of 0.72 kg/hr through a nozzle. Into a secondary reactor was introduced sodium metasilicate 5 hydrates at a rate of 70 g/hr and 61 wt% of hydrogen peroxide solution dissolving 0.65 wt% of magnesium sulfate 7 hydrates (MgSO₄ · 7H₂O) was sprayed through a nozzle for a reaction at a rate of 7.1 kg/hr. The conditions for reaction and drying in primary and secondary reactors were same as in Example I. According to the procedure described above, the run was continuously performed for 20 hr to yield 260 kg of sodium percarbonate particles showing the content of active oxygen of 14.54% and the mean particle size of 736 *µ*m. The particle size distribution of anhydrous sodium carbonate used in preparation process is shown in Table III and the analysis data of stability and particle size distribution of sodium percarbonate thus produced is shown in Table IV.

### EXAMPLE III

Using the anhydrous sodium carbonate same as in Example II and a larger amount of purified water introduced into the primary reactor, sodium percarbonate was prepared as in Example I. Into the primary reactor were introduced the anhydrous sodium carbonate and deionized water at a rate of 9 kg/hr and 0.9 kg/hr, respectively. Into the secondary reactor was introduced sodium metasilicate 5 hydrates at a rate of 70 g/hr and 61 wt% of hydrogen peroxide solution, wherein 0.65 wt% of magnesium sulfate 7 hydrates (MgSO₄ · 7H₂O) was dissolved, was sprayed through a nozzle for a reaction at a rate of 7.1 kg/hr. The conditions for reaction and drying in the primary and secondary reactors were same as in Example I. According to the procedure described above, the run was continuously performed for 15 hr to yield 196 kg of sodium percarbonate particles showing the content of active oxygen of 14.41 % and the mean particle size of 726 *µ*m. The analysis data of stability and particle size distribution of sodium percarbonate produced is shown in Table IV.

### COMPARATIVE EXAMPLE II

Using the anhydrous sodium carbonate same as in Example II and only the secondary reactor, the anhydrous sodium carbonate and sodium metasilicate 5 hydrates were introduced into the reactor at a rate of 9 kg/hr and 70 g/hr, respectively, and 61 wt% of hydrogen peroxide solution dissolving 0.65 wt% of magnesium sulfate 7 hydrates (MgSO₄ · 7H₂O) was sprayed through a nozzle for reaction at a rate of 7.1 kg/hr. The conditions for reaction and drying were same as in Example I. According to the procedure described above, the run was continuously performed for 10 hr to yield 120 kg of sodium percarbonate particles showing the content of active oxygen of 14.10% and the mean particle size of 452 *µ*m. The analysis data of stability and particle size distribution of sodium percarbonate thus produced is shown in Table IV.

**TABLE III**

| | | |
|---|---|---|
| Particle Size Distribution | 425 *µ*m | 2.1% |
| | 300 *µ*m | 28.5% |
| | 250 *µ*m | 22.6% |
| | 180 *µ*m | 22.2% |
| | Below 180 *µ*m | 24.6% |
| | Mean Particle Size | 244 *µ*m |
| Bulk Density | | 1.02 g/ml |

**TABLE IV**

| Classification | | Ex. 2 | Ex. 3 | Com.Ex. 2 |
|---|---|---|---|---|
| Particle Size Distribution | Above 1400 *µ*m | 0.4% | 0.3% | 0% |
| | 1000 *µ*m | 19.8% | 16.3% | 0.1% |
| | 850 *µ*m | 14.9% | 18.5% | 0.1% |
| | 600 *µ*m | 32.5% | 31.4% | 7.3% |
| | 500 *µ*m | 26.1% | 27.9% | 18.3% |
| | 425 *µ*m | 4.3% | 3.7% | 39.7% |
| | 300 *µ*m | 1.7% | 1.6% | 32.2% |
| | Below 300 *µ*m | 0.3% | 0.3% | 2.3% |
| | Mean Particle Size | 736 *µ*m | 726 *µ*m | 452 *µ*m |
| Content of Active Oxygen | | 14.54% | 14.41% | 14.10% |
| Bulk Density | | 1.01 g/ml | 1.01 g/ml | 0.99 g/ml |
| Water Content¹⁾ | | 0.12% | 0.11% | 0.12% |
| Storage Stability²⁾ | | 92% | 92% | 85% |
| Zeolite Stability³⁾ | | 64% | 63% | 41% |

| | | | | |
|---|---|---|---|---|
| ¹)water content: 55°C, 1 hr, vacuum dry | | | | |
| ²)storage stability: measured the residual content of active oxygen at 40°C with 80% of relative humidity for 7 days and the stability relative to the initial was calculated. | | | | |
| ³)zeolite stability: measured the residual content of active oxygen of a mixture including each 1.5 g of zeolite and sodium percarbonate at 32°C with 80% of relative humidity for 48 hr and the stability relative to the initial was calculated. | | | | |

As shown in Table III, the particle size of anhydrous sodium carbonate was much smaller than that used in Example I. However, it was surprisingly found that the particle size of sodium percarbonate, which was produced in Examples II and III using small-sized anhydrous sodium carbonate particles according to this invention, exhibited little or no difference from that produced in Example I. In this regard, it is verified that the most prominent feature of this invention is that the particle size of sodium percarbonate can be adjusted not depending on the particle size of anhydrous sodium carbonate. In contrast, the particle size of sodium percarbonate produced in Comparative Example II became smaller as the particle size of anhydrous sodium carbonate decreased, and the stability of the sodium percarbonate was also lower than that produced in Comparative Example I.

As described previously, the present invention can prepare sodium percarbonate with high quality having a content of active oxygen of above 14.0%, a bulk density of 0.90-1.05 g/ml and a mean particle size of 500-800 µm, by reacting anhydrous sodium carbonate with hydrogen peroxide solution without performing a separate granulation step and with little or no loss of active oxygen. According to this invention, water is introduced into anhydrous sodium carbonate in a specific content rate prior to reaction with hydrogen peroxide solution. As such, anhydrous sodium carbonate is not converted to sodium carbonate monohydrate, which is distinct over the conventional dry process for preparing sodium percarbonate. To convert anhydrous sodium carbonate to sodium carbonate monohydrate, the treatments at a high temperature including preheating sodium carbonate at a high temperature and reacting with boiled water are essential. However, in this invention, mixing sodium carbonate and water is performed at a relatively low temperature of below 30°C. If the temperature of the reactant is higher than 30°C in mixing sodium carbonate and water, the increase in particle size in preparing sodium percarbonate cannot be achieved. In addition, to convert anhydrous sodium carbonate to sodium carbonate monohydrate, the content of water should be more than 15%. However, in this invention, water of below 10% based on the weight of anhydrous sodium carbonate is required. If the content of water contained in sodium carbonate is larger, the amount of water to be evaporated in drying step becomes larger, i.e. the energy consumption becomes greater. Therefore, in the conventional dry process for preparing sodium percarbonate, for converting anhydrous sodium carbonate to sodium carbonate monohydrate, and drying wet sodium percarbonate produced by reaction between hydrogen peroxide solution and sodium carbonate monohydrate containing plentiful water, the energy consumption is enormously increased. In this context, the conventional dry process is not economical. In addition to this, the conventional dry process appears complex since hydration and granulation steps are to be carried out. The present invention can overcome such shortcomings of the conventional dry processes and enables to provide the process with simplicity and less energy consumption.

## Claims

1. A process for preparing granular sodium percarbonate, comprising:
(a) performing a reaction between sodium carbonate and hydrogen peroxide solution to produce sodium percarbonate in a reactor by simultaneously spraying said hydrogen peroxide solution while blowing air into said reactor and
(b) fluidized-bed drying of said sodium percarbonate to prepare said granular sodium percarbonate,
wherein said sodium carbonate is anhydrous sodium carbonate bound to free water so as to contain 5 to 10% of water based on the weight of anhydrous sodium carbonate.

2. The process according to claim 1, wherein said anhydrous sodium carbonate bound to free water is obtained by performing a reaction between anhydrous sodium carbonate and 5-10% of water based on the weight of anhydrous sodium carbonate at a temperature of 15-30°C.

3. The process according to claim 1, wherein said reaction between sodium carbonate and hydrogen peroxide solution is carried out in said reactor, wherein its internal temperature is maintained at 20-80°C.

4. The process according to claim 3, wherein said reaction between sodium carbonate and hydrogen peroxide solution is carried out in said reactor, wherein its internal temperature is maintained at 20-50°C.

5. The process according to claim 1, wherein said air is introduced at a rate of 2-8 m³/min per 1 m³ based on the volume of said reactor.

6. The process according to claim 1 or 5, wherein the temperature of said air is maintained at -5 ∼ 20°C.

7. The process according to claim 1, wherein the water content of the sodium percarbonate produced in reaction (a) is adjusted to 5-20% in said reaction between sodium carbonate and hydrogen peroxide solution.

8. The process according to claim 1, wherein the content of active oxygen in said sodium percarbonate prepared is in the range of from 14% to 14.9%.

9. The process according to claim 1, wherein the bulk density of said sodium percarbonate prepared is in the range of from 0.90-1.05 g/ml.

10. The process according to claim 1, wherein the mean particle size of said sodium percarbonate prepared is in the range of from 500-800 µm.

11. The process according to claim 1, wherein the undesirable particles produced in said fluidized-bed drying of said sodium percarbonate are recycled into a reactor for preparing sodium percarbonate so that said process for preparing granular sodium percarbonate is carried out continuously.

## Patentansprüche

1. Verfahren zur Herstellung von granulatförmigem Natriumpercarbonat, umfassend:
(a) das Durchführen einer Reaktion zwischen Natriumcarbonat und Wasserstoffperoxidlösung unter Bildung von Natriumpercarbonat in einem Reaktor durch gleichzeitiges Sprühen der Wasserstoffperoxidlösung während des Einblasens von Luft in den Reaktor und
(b) das Wirbelbetttrocknen des Natriumpercarbonats, um das granulatförmige Natriumpercarbonat herzustellen,
wobei das Natriumcarbonat ein wasserfreies Natriumcarbonat ist, das an freies Wasser gebunden ist, so dass es 5 bis 10 % Wasser, auf das Gewicht von wasserfreiem Natriumcarbonat bezogen, enthält.

2. Verfahren nach Anspruch 1, wobei das wasserfreie, an freies Wasser gebundene Natriumcarbonat durch Durchführen einer Reaktion zwischen wasserfreiem Natriumcarbonat und 5 - 10 % Wasser, auf das Gewicht des wasserfreien Natriumcarbonats bezogen, bei einer Temperatur von 15 - 30 °C erhalten wird.

3. Verfahren nach Anspruch 1, wobei die Reaktion zwischen Natriumcarbonat und Wasserstoffperoxidlösung in dem Reaktor durchgeführt wird, wobei seine Innentemperatur bei 20 - 80 °C gehalten wird.

4. Verfahren nach Anspruch 3, wobei die Reaktion zwischen Natriumcarbonat und Wasserstoffperoxidlösung in dem Reaktor durchgeführt wird, wobei seine Innentemperatur bei 20 - 50 °C gehalten wird.

5. Verfahren nach Anspruch 1, wobei die Luft mit einer Geschwindigkeit von 2 - 8 m³/min pro 1 m³, auf das Volumen des Reaktors bezogen, eingeführt wird.

6. Verfahren nach Anspruch 1 oder 5, wobei die Temperatur der Luft bei -5 - 20 °C gehalten wird.

7. Verfahren nach Anspruch 1, wobei der Wassergehalt des bei der Reaktion (a) erzeugten Natriumpercarbonats bei der Reaktion zwischen Natriumcarbonat und Wasserstoffperoxid auf 5 - 20 % eingestellt wird.

8. Verfahren nach Anspruch 1, wobei der Gehalt an Aktivsauerstoff in dem hergestellten Natriumpercarbonat im Bereich von 14 % bis 14,9 % liegt.

9. Verfahren nach Anspruch 1, wobei die Schüttdichte des hergestellten Natriumpercarbonats im Bereich von 0,90 - 1,05 g/ml liegt.

10. Verfahren nach Anspruch 1, wobei die mittlere Teilchengröße des hergestellten Natriumpercarbonats im Bereich von 500 - 800 µm liegt.

11. Verfahren nach Anspruch 1, wobei die unerwünschten Teilchen, die beim Wirbelbetttrocknen des Natriumcarbonats gebildet werden, in den Reaktor für die Herstellung von Natriumpercarbonat rückgeführt werden, so dass das Verfahren zur Herstellung von granulatförmigem Natriumpercarbonat kontinuierlich durchgeführt wird.

## Revendications

1. Procédé de préparation de percarbonate de sodium sous forme de granulés, qui comprend:
(a) la réalisation d'une réaction entre le carbonate de sodium et une solution de peroxyde d'hydrogène pour produire le percarbonate de sodium dans un réacteur en pulvérisant ladite solution de peroxyde d'hydrogène tout en introduisant simultanément de l'air par soufflage dans ledit réacteur et
(b) le séchage sur lit fluidisé dudit percarbonate de sodium pour préparer ledit percarbonate de sodium sous forme de granulés,
où ledit carbonate de sodium est un carbonate de sodium anhydre lié à de l'eau libre de façon à contenir de 5 à 10 % d'eau sur la base du poids de carbonate de sodium anhydre.

2. Procédé selon la revendication 1, où ledit carbonate de sodium anhydre lié à de l'eau libre est obtenu par une réaction entre le carbonate de sodium anhydre et 5-10 % d'eau libre sur la base du poids de carbonate de sodium anhydre à une température de 15-30 °C.

3. Procédé selon la revendication 1, où ladite réaction entre le carbonate de sodium et la solution de peroxyde d'hydrogène est effectuée dans ledit réacteur, dans lequel la température interne est maintenue à 20-80 °C.

4. Procédé selon la revendication 3, où ladite réaction entre le carbonate de sodium et la solution de peroxyde d'hydrogène est effectuée dans ledit réacteur, dans lequel la température interne est maintenue à 20-50 °C.

5. Procédé selon la revendication 1, où ledit air est introduit à un débit de 2-8 m³/min par 1 m³ sur la base du volume dudit réacteur.

6. Procédé selon la revendication 1 ou 5, où la température dudit air est maintenue à -5 - 20°C.

7. Procédé selon la revendication 1, où la teneur en eau du percarbonate de sodium produit à la réaction (a) est ajustée à 5-20 % durant ladite réaction entre le carbonate de sodium et la solution de peroxyde d'hydrogène.

8. Procédé selon la revendication 1, où le contenu en oxygène actif dudit percarbonate de sodium produit est compris entre 14 % et 14,9 %.

9. Procédé selon la revendication 1, où la masse volumique en vrac dudit percarbonate de sodium produit est comprise entre 0,90 et 1,05 g/ml.

10. Procédé selon la revendication 1, où la taille moyenne des particules dudit percarbonate de sodium produit est comprise entre 500 et 800 µm.

11. Procédé selon la revendication 1, où les particules indésirables produites durant ledit séchage sur lit fluidisé dudit percarbonate de sodium sont recyclées dans un réacteur utilisé pour préparer le percarbonate de sodium, si bien que ledit procédé de préparation de percarbonate de sodium sous forme de granulé est effectué en continu.
